# EUROPÄISCHE PATENTSCHRIFT

(11) **EP 0 709 805 B1**
(45) Veröffentlichungstag und Bekanntmachung des Hinweises auf die Patenterteilung: **10.09.2003**
(21) Anmeldenummer: 95115653.8
(22) Anmeldetag: 04.10.1995
(51) Int. Cl.: G06K 19/18, G06K 19/077, B29C 43/18

(54) **Verfahren zur Herstellung von Datenträgern mit eingebetteten Elementen und Vorrichtung zur Durchführung des Verfahrens**
Method for producing data carriers with embedded elements and device for carrying out this method
Méthode de fabrication de porteurs d'informations incorporant des éléments et dispositif de mise en oeuvre de la méthode

(30) Priorität: 06.10.1994 DE 4435802
(43) Veröffentlichungstag der Anmeldung: 01.05.1996
(73) Patentinhaber: Giesecke & Devrient GmbH, 81677 München (DE)
(72) Erfinder: Hoppe, Joachim, D-81667 München (DE); Hohmann, Arno, D-81369 München (DE)
(74) Vertreter: Klunker . Schmitt-Nilson . Hirsch

(56) Entgegenhaltungen:
- EP-A- 0 277 854
- EP-A- 0 554 581
- WO-A-94/22110
- DE-A- 4 243 987
- FR-A- 2 700 041
- FR-A- 2 702 067
- GB-A- 1 171 315
- US-A- 4 803 114
- US-A- 5 350 553

## Beschreibung

Die Erfindung betrifft ein Verfahren zur Herstellung eines Datenträgers mit einem Kartenkörper, der zwei planparallele Hauptflächen aufweist und in dem mindestens ein Element, wie beispielsweise ein elektronisches Modul oder ein Magnetstreifen etc., angeordnet ist. Die Erfindung betrifft ferner eine Vorrichtung zur Durchführung des Verfahrens.

In der Vergangenheit sind bereits verschiedene Verfahren zur Herstellung von Datenträgern der obengenannten Art bekannt geworden. So werden z. B. mehrschichtige Datenträger durch das Verbinden einzelner Schichten unter der Einwirkung von Wärme und Druck hergestellt, was allgemein als Laminiertechnik bezeichnet wird. Hierbei können Elemente, die in den Kartenkörper eingebracht werden sollen, bereits vor dem Laminieren in dafür vorgesehene Aussparungen in den Schichtaufbau eingelegt werden. Es ist auch schon vorgeschlagen worden, einschichtige Kartenkörper aus einer Folie auszustanzen, wobei gleichzeitig eine Aussparung, z. B. zur Aufnahme eines elektronischen Moduls, erzeugt werden kann.

Schließlich ist es z. B. aus der EP 0 277 854 B1 bekannt geworden, Datenträger mit einem eingebetteten elektronischen Modul in Spritzgußtechnik zu fertigen. Dazu wird eine Spritzgußform mit einem Formraum bereitgestellt, dessen Abmessungen denen des Datenträgers entsprechen. Vor dem Einspritzen der Kunststoffmasse wird in den Formraum das elektronische Modul an einer Formraumhälfte derartig plaziert, daß die Kontaktflächen des Moduls plan an der Formraumhälfte anliegen und durch Saugluft in dieser Position fixiert werden. Danach wird über eine Seitenkante der Gußform die Kunststoffmasse zur Bildung des Kartenkörpers eingespritzt, so daß das Modul formschlüssig von Kunststoffmasse umgeben ist. Durch eine entsprechende Formgebung der Gußmasse des elektronischen Moduls wird dieses sicher im Kartenkörper verankert. Der Datenträger kann nunmehr der Gußform entnommen werden.

Um eine sichere Fixierung des elektronischen Moduls im Formraum während des Einspritzvorganges zu gewährleisten, können Zusatzmaßnahmen ergriffen werden. So kann das Modul beispielsweise durch eine federnd gelagerte Platte gegen die Formraumhälfte, an der es fixiert ist, gedrückt werden, die sich beim Einspritzen der Kunststoffmasse absenkt.

Eine gleichmäßige und vollständige Ausfüllung des Formraums mit Kunststoffmaterial wird in der Spritzgußtechnik dadurch erreicht, daß das Material mit sehr hohem Druck in den Formraum eingespritzt wird. Dies hat einen relativ hohen apparativen Aufwand zur Folge, da der hohe Einspritzdruck einerseits erzeugt werden muß und an dem Formraum andererseits hohe Zuhaltekräfte aufgebracht werden müssen, um ein "Aufspreitzen" der Formraumhälften während des Einspritzvorgangs zu verhindern. Aus diesem Grunde sind Spritzgußwerkzeuge recht teuer, so daß Spritzgußartikel allgemein und spritzgegossene Datenträger im besonderen häufig nur in hohen Stückzahlen rationell zu fertigen sind.

Die Patentschrift US 5,350,553 gegen die die Ansprüche abgegrenzt wurden, beschreibt ein Spritzgußverfahren zur Herstellung von Plastikkarten, bei welchem in einen von zwei Folien begrenzten Hohlraum ein elektronischer Schaltkreis mittels einer speziellen Zuführeinrichtung eingebracht wird. Nach dem Einbringen des Schaltkreises wird flüssige Kunststoffmasse in den Hohlraum eingespritzt und ausgehärtet.

Die französische Offenlegungsschrift FR 2 702 067 (entspr. US-Patent 5 510 074) beschreibt ein Verfahren sowie eine Vorrichtung, bei welchen eine Trägerfolie auf eine der Grundflächen eines Hohlraums gelegt wird, anschließend in den Hohlraum flüssige Kunststoffmasse eingespritzt wird und schließlich ein elektronisches Modul in den bereits mit flüssiger Kunststoffmasse befüllten Hohlraum eingebracht wird.

Die Patentschrift GB 1,171,315 offenbart ein Verfahren zur Umhüllung eines Kernmaterials mit einem Hüllenmaterial. Zunächst wird in einer Form mit eine erste Schicht der Hülle mit pulverförmigem Hüllenmaterial erzeugt. Auf diese erste Schicht wird dann eine Schicht aus pulverförmigem Kemmaterial aufgebracht, welche schließlich mit pulverförmigem Hüllenmaterial abgedeckt wird. Das System aus Pulverschichten wird schließlich einem Sinterprozeß unterzogen.

Es ist deshalb Aufgabe der Erfindung, ein neues Verfahren und eine Vorrichtung zur Herstellung von ein- oder mehrschichtigen Datenträgern vorzuschlagen, in die gegebenenfalls eines der obengenannten Elemente eingebettet ist.

Die Aufgabe wird durch die Merkmale der Ansprüche 1 und 9 gelöst.

Der Grundgedanke der Erfindung besteht darin, daß zumindest ein Teil des Datenträgers im Preßverfahren durch das Verpressen von Kunststoffgranulat oder -pulver hergestellt wird. Hierbei werden die Elemente, die gegebenenfalls im Datenkörper eingebettet werden sollen, vorzugsweise bereits in dem in der Preßvorrichtung befindlichen Kunststoffgranulat oder -pulver an der gewünschten Position eingebracht und erst danach wird das Kunststoffgranulat oder -pulver verpreßt.

Das neue Verfahren hat somit den entscheidenden Vorteil, daß die in den Kartenkörper einzubettenden Elemente bereits vor dem eigentlichen Preßvorgang vollständig von Kunststoffmasse umgeben sind. Der eigentliche Materialformungsprozeß durch den Preßvorgang ist somit zeitlich unabhängig von der Einbettung der Elemente in die Kunststoffmasse und es kann auf zusätzliche Hilfsmittel zur Positionierung und Fixierung der Elemente ganz oder weitestgehend verzichtet werden. Gleichzeitig werden die Elemente besonders schonend in den Kartenkörper eingebracht, da sie beim Preßvorgang bereits durch die umgebende Kunststoffmasse geschützt sind.

Die mit der Erfindung erzielten Vorteile sind ferner darin zu sehen, daß zur Durchführung des Verfahrens nur ein geringer apparativer Aufwand notwendig ist. So besteht eine Preßvorrichtung lediglich aus einem Gesenk, das mit Kunststoffgranulat beschickt und dort erweicht wird und einem Preßstempel, mit dem die erweichte Kunststoffmasse in die gewünschte Form gebracht wird. Ferner können dem Kunststoffgranulat auf einfache Art und weise Zusatzstoffe auch lokal beigemengt werden, die im fertiggestellten Kartenkörper des Datenträgers bestimmte Effekte hervorrufen. Schließlich entsteht beim Preßvorgang eine homogene Verteilung des Kunststoffmaterials ohne Vorzugsrichtungen in der Molekülorientierung, die zu Bruchstellen im Datenträger führen können.

Gemäß einem ersten Ausführungsbeispiel der Erfindung wird ein Datenträger hergestellt, der in seinem Inneren ein zusätzliches Element, wie beispielsweise ein elektronisches Modul für den berührungslosen Datenaustausch enthält. Dazu wird das Gesenk mit einer ersten Menge Kunststoffgranulat beschickt, das Element auf die entstehende erste Schicht gelegt und mit einer zweiten Menge Kunststoffgranulat abgedeckt, so daß sich das Element zwischen zwei Schichten befindet und vollkommen von Kunststoffmaterial umgeben ist. Das Granulat wird danach erweicht und mit dem Preßstempel zum Kartenkörper verpreßt.

Gemäß einem weiteren Ausführungsbeispiel der Erfindung wird ein Datenträger hergestellt, der ein zusätzliches Element enthält, das teilweise an der Oberfläche des Kartenkörpers liegt, wie beispielsweise ein elektronisches Modul für den berührenden Datenaustausch. Dazu wird das Gesenk wiederum mit einer abgemessenen Menge Kunststoffgranulat beschickt und das Element entweder an der gewünschten Position in das Kunststoffgranulat eingebettet oder aber nach Erweichung des Granulats mit Hilfe des Preßstempels in dieses eingedrückt.

Gemäß einem dritten Ausführungsbeispiel der Erfindung weisen das Gesenk oder der Preßstempel erhabene Bereiche auf, mit denen beim Verpressen des erweichten Kunststoffmaterials Aussparungen zur Aufnahme von Elementen im Kartenkörper gebildet werden. In diesem Fall werden die Elemente in einem separaten Verfahrensschritt in den Kartenkörper eingebracht.

Schließlich kann gemäß einem weiteren Ausführungsbeispiel der Erfindung der Datenträger bereits beim Preßvorgang mit Deckfolien versehen werden, die in den Formraum eingelegt werden und an denen gegebenenfalls zusätzliche Elemente angebracht sind. Beispielsweise kann in das Gesenk eine Folie mit Magnetstreifen eingelegt und das Gesenk nachher mit Kunststoffgranulat beschickt werden, das sich beim Preßvorgang mit der Folie anlaog zur Laminiertechnik verbindet.

Im Zusammenhang mit den nachstehenden Figuren werden Ausführungsbeispiele und weitere Vorteile der Erfindung näher erläutert. Darin zeigen:
- Fig. 1: einen Datenträger in Aufsicht,
- Fig. 2a: eine Preßvorrichtung im Querschnitt,
- Fig. 2b: ein in die Preßvorrichtung eingelegtes Element in Aufsicht,
- Fig. 3: eine Preßvorrichtung im Querschnitt,
- Fig. 4: eine Preßvorrichtung mit erhabenen Bereichen im Querschnitt,
- Fig. 5a: eine Trägerfolie in Aufsicht,
- Fig. 5b: eine Preßvorrichtung mit eingelegten Folien im Querschnitt.

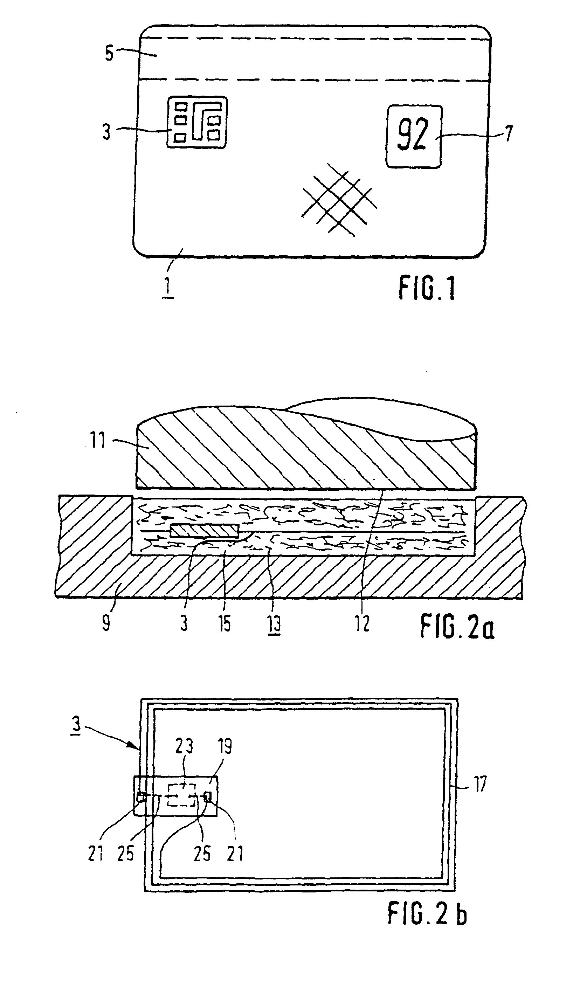

Fig. 1 zeigt einen Datenträger in Aufsicht. Der Datenträger verfügt über Abmessungen, die in einer ISO-Norm mit der Bezeichnung ISO 7810 festgelegt sind. In den Hauptflächen des Datenträgers 1 können, je nach seiner Verwendung, unterschiedliche Elemente, wie beispielsweise ein elektronisches Modul 3, ein Magnetstreifen 5 oder ein Hologramm 7 eingebettet sein. Für bestimmte Anwendungen des Datenträgers können die Elemente, z. B. ein elektronisches Modul für den berührungslosen Datenaustausch, auch im Inneren des Kartenkörpers liegen. Diejenigen Elemente, die zum Teil an der Oberfläche des Kartenkörpers liegen, befinden sich in einer vorgegebenen bzw. genormten Position.

Fig. 2a zeigt eine Preßvorrichtung, bestehend aus einem Gesenk 9 und einem Preßstempel 11 mit einer Stirnfläche 12, die der Hauptfläche des Kartenkörpers entspricht, im Querschnitt. Das Gesenk 9 enthält eine Aussparung 13, deren Grundfläche der Hauptfläche und deren Tiefe mindestens der Dicke des Kartenkörpers entspricht. Die Aussparung 13 im Gesenk 9 wird bei offener Preßvorrichtung mit einer abgemessenen Menge Formmasse 15, bestehend z. B. aus Kunststoffgranulat oder Kunststoffpulver, beschickt, die notwendig ist, um den gewünschten Preßling, in diesem Fall also einen Kartenkörper, mit einer vorgegebenen Dicke zu erzeugen. Die Formmasse 15 wird danach bis zur Fließbarkeit erhitzt, so daß sie nach dem Schließen der Preßvorrichtung den gesamten Formhohlraum, der zwischen dem Preßstempel 11 und dem Gesenk 9 entsteht, unter Druck ausfüllt. Nach dem Erstarren des Kartenkörpers wird die Preßvorrichtung geöffnet und der Kartenkörper entnommen oder ausgeworfen. Das Gesenk 9 und der Preßstempel 11 sind im allgemeinen an der oberen und an der unteren Aufspannplatte einer Presse befestigt und dauernd behitzt bzw. heizbar und kühlbar ausgelegt.

Wie in der Fig. 2a gezeigt, ist in die Formmasse 15 ein Element, z. B. ein elektronisches Modul für den berührungslosen Datenaustausch, derartig eingebettet, daß es allseitig von Formmasse umgeben ist, beim fertiggestellten Kartenkörper also in dessen Inneren liegt. Dazu wird die Aussparung 13 zunächst mit einer ersten Menge der Formmasse 15 beschickt, auf die das elektronische Modul 3 aufgelegt wird. Danach wird die Aussparung 13 mit einer zweiten Menge der Formmasse 15 beschickt. Die Formgebung des Kartenkörpers ist somit an sich beendet, die Formmasse 15 braucht lediglich noch erhitzt und verpreßt zu werden. Sowohl bei der Formgebung des Kartenkörpers als auch bei den nachfolgenden Schritten wird das eingebettete elektronische Modul 3 in seiner Position ausschließlich durch die Formmasse 15 gehalten, so daß keine zusätzlichen Haltevorrichtungen, wie beispielsweise beim Spritzgießen, notwendig sind. Dennoch ergibt sich ein Kartenkörper, dessen eingebettetes Element formschlüssig von Formmasse umgeben ist.

Es ist auch möglich, die Formmasse 15 mit bestimmten Zusatzstoffen zu versehen, z. B. um bestimmte Eigenschaften im Kartenkörper hervorzurufen. So kann beispielsweise für den Fall, daß in den Kartenkörper ein elektronisches Modul für den induktiven Datenaustausch eingebettet wird, der Formmasse Ferritpulver beigemengt werden, um die Güte der Spule des Moduls und damit die Energieeinkopplung in das Modul zu verbessern.

Es ist ferner möglich, die Formmasse 15 in verschiedenen Schichten mit unterschiedlichen Zusatzstoffen zu versehen. So kann beispielsweise die Formmasse, die bei dem fertiggestellten Kartenkörper des Datenträgers an dessen Oberläche liegt, mit Zusatzstoffen versehen werden, die ein Belasern der Oberfläche erlauben und die dazwischenliegende Formmasse kann, wie oben ausgeführt, mit Ferritpulver versehen werden. Um eine derartige Verteilung zu erreichen, wird die Aussparung des Gesenks, entsprechend den gewünschten Schichten im fertiggestellten Kartenkörper, mehrmals mit Formmasse beschickt. Beim Verpressen der Formmasse entsteht also ein an sich einschichtiger Kartenkörper, der dennoch in unterschiedlichen Bereichen mit unterschiedlichen Zusatzstoffen versehen ist.

Zur Herstellung von Halbzeugen kann die Aussparung im Gesenk auch mit einer Menge an Formmasse beschickt werden, die geringer ist als diejenige Menge, die zur Erstellung eines Preßlings in Kartendicke notwendig wäre. Vielmehr weist der Preßling eine geringere Dicke auf und kann nach Entnahme aus der Preßvorrichtung zur Fertigstellung des Datenträgers mit separat hergestellten Deckschichten versehen werden. Zur Herstellung eines fertigen Halbzeuges braucht also kein eigens dafür vorgesehenes Werkzeug bereitgestellt werden, wie es z. 3. bei der Spritzgußtechnik der Fall wäre.

Fig. 2b zeigt das in den Datenträger eingebettete elektronische Modul 3 für den berührungslosen Datenaustausch in Aufsicht. Es besteht aus einer z. B. drahtgewickelten Spule 17, deren Enden mit auf einem Trägerfilm 19 liegenden Kontaktflächen 21 leitend verbunden sind. Auf der den Kontaktflächen 21 gegenüberliegenden Seite des Trägerfilms 19 ist ein integrierter Schaltkreis 23 aufgebracht, der z. B. durch Bonddrähte 25, die durch entsprechende Fenster im Trägerfilm 19 auf die Kontaktflächen 21 führen, leitend mit diesen verbunden ist. Zum Schutz vor mechanischen Belastungen können die Bonddrähte 25 und der integrierte Schaltkreis 23 mit einer Gußmasse vergossen sein.

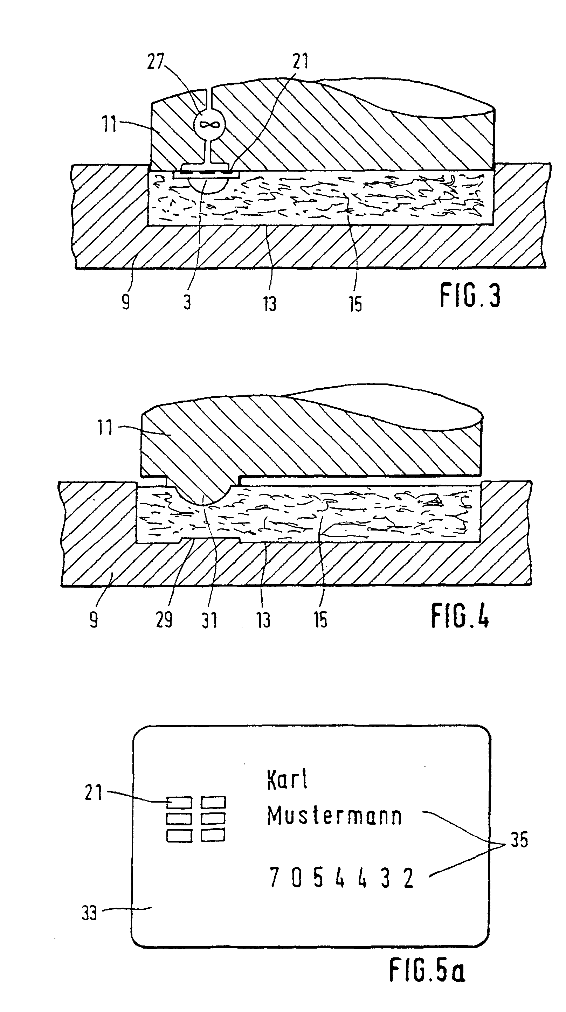

Fig. 3 zeigt wiederum eine Preßvorrichtung, bestehend aus einem Gesenk 9 und einem Preßstempel 11 im Querschnitt. Der Preßstempel 11 enthält eine Saugvorrichtung 27, mit deren Hilfe durch von außen angelegte Saugluft ein elektronisches Modul 3 derart an dem Preßstempel 11 positioniert und fixiert werden kann, daß die Kontaktflächen 21 des Moduls 3 plan am Preßstempel anliegen. Beim Absenken des Preßstempels 11 in die Aussparung 13 des Gesenks 9 wird das elektronische Modul an der dafür vorgesehenen Position in die bis zur Fließbarkeit erwärmte Formmasse 15 eingedrückt. Hierbei wird die Fixierung des Elementes an der Stirnfläche des Preßstempels durch den wirkenden Druck unterstützt, so daß das Element am Stempel nur leicht fixiert zu werden braucht. Es entsteht also ein Datenträger, der in der vorhergehenden bzw. genormten Position ein elektronisches Modul enthält. Selbstverständlich können in der genannten Art und Weise auch andere Elemente, von denen ein Teil an der Oberfläche des Datenträgers liegt, in den Kartenkörper eingepreßt werden. Es ist ebenso möglich, die Elemente anstatt an der Stirnfläche des Stempels in der Aussparung zu positionieren und zu fixieren.

Alternativ zur Fixierung des Elements an der Stirnfläche des Preßstempels 11 ist es auch möglich, das Element nach dem Beschicken des Gesenks 9 mit Formmasse 15 direkt in dieser zu positionieren. Eine Fixierung des Elementes in seiner Position ist dann ausschließlich durch die umgebende Formmasse gegeben. Diese Vorgehensweise bietet sich dann besonders an, wenn eine sehr genaue Positionierung der Elemente, z. B. gemäß einer Norm, im fertiggestellten Datenträger nicht notwendig ist.

Fig. 4 zeigt eine Preßvorrichtung im Querschnitt, deren Gesenk 9 und Preßstempel 11 erhabene Bereiche 29 bzw. 31 aufweisen, mittels derer beim Preßvorgang Aussparungen im Kartenkörper des Datenträgers gebildet werden, in die später entsprechende Elemente eingebracht werden. So ensteht beispielsweise durch den erhabenen Bereich 31 in der Stirnfläche des Preßstempels 11 eine Aussparung zur Aufnahme eines elektronischen Moduls im Kartenkörper. Eine derartige Ausführungsform der Preßvorrichtung ist dann besonders vorteilhaft, wenn die Herstellung des Kartenkörpers und die Einbettung der Elemente in diesen an unterschiedlichen Orten erfolgt.

Fig. 5a zeigt eine Deckschicht 33 in Größe der Hauptfläche eines Datenträgers in Aufsicht. Die Deckschicht kann als Trägerfolie für eines der Elemente genutzt werden, die in den Datenträger eingebettet werden sollen. So kann in die Deckschicht beispielsweise ein Magnetoder Unterschriftsstreifen oder auch ein Hologramm eingebettet sein. Für den Fall, daß die Deckschicht 33 als Trägerfolie für ein elektronisches Modul genutzt werden soll, enthält sie Kontaktflächen 21, unterhalb derer sich nicht dargestellte Fenster befinden. Ferner kann die Deckschicht 33 ein hochwertiges Druckbild und alphanumerische Daten 35 z. B. bezüglich des späteren Karteninhabers enthalten.

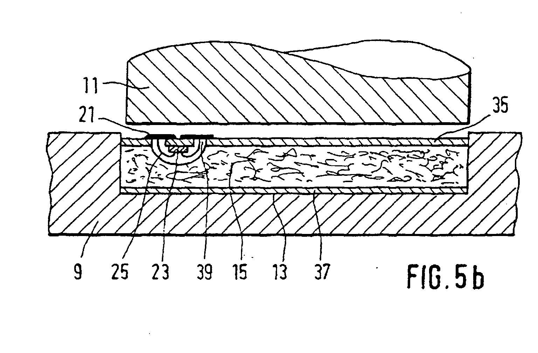

Fig. 5b zeigt wiederum eine Preßvorrichtung, bestehend aus einem Gesenk 9 und einem Preßstempel 11, im Querschnitt. In die Aussparung 13 des Gesenks 9 wird zunächst eine Deckschicht 37 derart eingelegt, daß der Boden der Aussparung 13 vollständig von der Deckschicht abgedeckt ist. Im Bodenbereich der Aussparung 13 können zusätzliche Saugvorrichtungen vorgesehen sein, mit Hilfe derer die Deckschicht 37 fixiert werden kann. Nach dem Einlegen der Deckschicht 37 wird die Aussparung 13 mit einer abgemessenen Menge der Formmasse 15 beschickt, auf die wiederum eine Deckschicht 35 aufgelegt wird. Auf der den Kontaktflächen gegenüberliegenden Seite der Deckschicht 35 ist im Bereich der Kontaktflächen 21 ein integrierter Schaltkreis 23 aufgeklebt und durch Bonddrähte, die durch die Fenster 39 auf die Kontaktflächen 21 geführt werden, leitend mit diesen verbunden. Zum Schutz vor mechanischen Belastungen sind die Bonddrähte 25 und der integrierte Schaltkreis 23 mit einer Gußmasse vergossen.

Beim Preßvorgang verbindet sich die bis zur Fließbarkeit erweichte Formmasse 15 mit den Deckschichten 33 und 37, so daß ein mehrschichtiger Datenträger entsteht. Die Deckschichten 33 und 35 können beispielsweise aus einem Kunststoffmaterial bestehen, das sich besonders gut mit der Formmasse verbindet und zusätzlich innenseitig mit einem thermoaktivierbaren Kleber beschichtet sein, um den Verbund zwischen den Schichten zu verbessern. Durch das obengenannte Verfahren ist also ein mehrschichtiger Datenträger mit eingebetteten Elementen auf einfache Art und Weise herzustellen, wobei die Deckschichten des Datenträgers mit qualitativ sehr hochwertigen Druckbildern versehen sein können.

Obwohl in den Figuren jeweils Preßvorrichtungen für die Einzelkartenfertigung gezeigt sind, ist es natürlich auch möglich, Preßvorrichtungen bereitzustellen, in denen mehrere Karten gleichzeitig gefertigt werden können. In diesem Fall braucht das Gesenk lediglich eine Vielzahl von Aussparungen in Kartengröße zu haben und der Preßstempel entsprechend mehrfach ausgebildet sein. Alternativ ist es auch möglich, in der Preßvorrichtung zunächst eine große Kunststoffplatte zu fertigen, aus der später die Datenträger ausgestanzt oder ausgeschnitten werden.

Abschließend sei erwähnt, daß die gezeigten Ausführungsbeispiele keinerlei Anspruch auf Vollständigkeit erheben. So ist es z. B. möglich, verschiedene Ausführungsbeispiele miteinander zu kombinieren, ohne den erfinderischen Gedanken zu verlassen. Beispielsweise ist es möglich, den Kartenkörper, dessen Herstellung in der Fig. 2a gezeigt ist, beidseitig mit Deckschichten zu versehen, indem man wie im Zusammenhang mit Fig. 5b erläutert, verfährt.

## Patentansprüche

1. Verfahren zur Herstellung eines Datenträgers (1) mit einem Kartenkörper, der zwei planparallele Hauptflächen aufweist und in dem mindestens ein Element, wie beispielsweise ein elektronisches Modul (3) oder ein Magnetstreifen (5) etc., angeordnet ist, umfassend folgende Verfahrensschritte:
- Bereitstellen einer Preßvorrichtung mit einem Preßstempel (11), dessen Stirnfläche (12) der Hauptfläche des Kartenkörpers entspricht und mit einem Gesenk (9), das eine Aussparung (13) aufweist, deren Grundfläche der Hauptfläche und deren Tiefe mindestens der Dicke des Kartenkörpers entspricht,
- Beschicken der Aussparung (13) des Gesenks (9) mit einer abgemessenen Menge Formmasse (15),
- Absenken des Preßstempels (11) in die Aussparung (13) des Gesenks (9) und Verpressen der Formmasse (15) mit dem Preßstempel (11), bis die Formmasse (15) in der Aussparung (13) die gewünschten Abmessungen annimmt, und
- Rückführen des Preßstempels (11) und Entnehmen des Kartenkörpers aus der Preßvorrichtung,
**dadurch gekennzeichnet, daß**
- die Formmasse (15), mit welcher die Aussparung (13) des Gesenks (9) beschickt wird, aus Kunststoffgranulat oder Kunststoffpulver besteht und
- die Formmasse (15) nach dem Beschicken der Aussparung (13) des Gesenks (9) bis zur Fließbarkeit erhitzt wird.

2. Verfahren zur Herstellung eines Datenträgers nach Anspruch 1, **dadurch gekennzeichnet, daß**
- die Aussparung (13) des Gesenks (9) mit einer ersten abgemessenen Menge Formmasse (15) beschickt wird, so daß die Aussparung (13) mit einer ersten Schicht angefüllt ist,
- auf die erste Schicht ein Element, z. B. ein elektronisches Modul (3) für den berührungslosen Datenaustausch, gelegt wird,
- die Aussparung (13) des Gesenks (9) mit einer zweiten abgemessenen Menge Formmasse (15) beschickt wird, so daß das genannte Element zwischen zwei Schichten der Formmasse (15) liegt und allseitig von dieser umgeben ist.

3. Verfahren zur Herstellung eines Datenträgers nach Anspruch 1, **dadurch gekennzeichnet, daß** beim Verpressen der Formmasse (15) mit dem Preßstempel (11) ein Element, das zumindest teilweise an der Oberfläche des fertiggestellten Datenträgers (1) liegt, in die Formmasse (15) eingepreßt wird.

4. Verfahren zur Herstellung eines Datenträgers nach Anspruch 3, **dadurch gekennzeichnet, daß** der Teil des Elements, der an der Oberfläche des fertiggestellten Datenträgers (1) liegen soll, formschlüssig an der Stirnfläche (12) des Preßstempels (11) anliegt und in seiner Position dort solange fixiert wird, bis der Preßvorgang abgeschlossen ist.

5. Verfahren zur Herstellung eines Datenträgers nach Anspruch 3, **dadurch gekennzeichnet, daß** das Element vor dem Verpressen in die in der Aussparung (13) befindliche Formmasse (15) eingelegt und durch diese in seiner Position gehalten wird.

6. Verfahren zur Herstellung eines Datenträgers nach Anspruch 1, **dadurch gekennzeichnet, daß** der Preßstempel (11) und/oder die Aussparung (13) im Gesenk (9) erhabenene Bereiche (29, 31) aufweisen, durch die beim Verpressen der Formmasse (15) Aussparungen im Kartenkörper gebildet werden, in die später Elemente eingebettet werden können.

7. Verfahren zur Herstellung eines Datenträgers nach Anspruch 1, **dadurch gekennzeichnet, daß**
- in die Aussparung (13) des Gesenks (9) eine Schicht (37) eingelegt wird, die in ihrer Größe der Hauptfläche des herzustellenden Kartenkörpers entspricht,
- die Aussparung (13) mit einer abgemessenen Menge Pormmasse (15) beschickt wird,
- auf die Formmasse (15) eine weitere Schicht (33, 35) aufgelegt wird, die in ihrer Größe der Hauptfläche des herzustellenden Kartenkörpers entspricht.

8. Verfahren zur Herstellung eines Datenträgers nach Anspruch 7, **dadurch gekennzeichnet, daß** zumindest eine der in die Aussparung (13) eingelegten Schichten ein zusätzliches Element, wie beispielsweise ein elektronisches Modul (3) oder einen Magnetstreifen (5) enthält.

9. Preßvorrichtung zur Herstellung eines Datenträgers (1) mit einem Kartenkörper, der zwei planparallele Hauptflächen aufweist und in dem mindestens ein Element, wie beispielsweise ein elektronisches Modul (3) oder ein Magnetstreifen (5) etc., angeordnet ist, bestehend aus einem Preßstempel (11) und einem Gesenk (9), wobei
- der Preßstempel (11) eine Stirnfläche (12) aufweist, die der Hauptfläche des herzustellenden Kartenkörpers entspricht,
- das Gesenk (9) eine Aussparung (13) aufweist, dessen Grundfläche der Hauptfläche und deren Tiefe mindestens der Dicke des herzustellenden Kartenkörpers entspricht, und
- eine Einrichtung vorgesehen ist zum Beschicken der Aussparung (13) des Gesenks (9) mit einer abgemessenen Menge Formmasse (15),
**dadurch gekennzeichnet, daß**
- die Formmasse (15), mit welcher die Aussparung (13) des Gesenks (9) beschickt wird, aus Kunststoffgranulat oder Kunststoffpulver besteht und
- eine Einrichtung vorgesehen ist zum Erhitzen der in der Aussparung (13) des Gesenks (9) befindlichen Formmasse (15) bis zur Fließbarkeit.

10. Preßvorrichtung nach Anspruch 9, **dadurch gekennzeichnet, daß** die Stirnfläche (12) des Preßstempels (11) und/oder die Aussparung (13) des Gesenks (9) erhabene Bereiche (29, 31) aufweisen.

11. Preßvorrichtung nach Anspruch 9, **dadurch gekennzeichnet, daß** der Preßstempel (11) einen Saugluftkanal (27) enthält, mit dessen Hilfe ein Element an seiner Stirnfläche (12) plaziert und fixiert werden kann.

## Claims

1. A method for producing a data carrier (1) with a card body having two plane-parallel main surfaces and at least one element, for example an electronic module (3) or magnetic stripe, etc., disposed therein, comprising the following method steps:
- providing a pressing apparatus having a pressure ram (11) whose end face (12) corresponds to the main surface of the card body and a die (9) with a recess (13) whose base surface corresponds to the main surface and whose depth at least to the thickness of the card body,
- charging the recess (13) of the die (9) with a measured quantity of molding compound (15),
- lowering the pressure ram (11) into the recess (13) of the die (9) and pressing the molding compound (15) with the pressure ram (11) until the molding compound (15) in the recess (13) assumes the desired dimensions, and
- returning the pressure ram (11) and removing the card body from the pressing apparatus,
**characterized in that**
- the molding compound (15) with which the recess (13) of the die (9) is charged consists of plastic granular material or plastic powder, and
- the molding compound (15) is heated to the point of flowability after the recess (13) of the die (9) is charged.

2. A method for producing a data carrier according to claim 1, **characterized in that**
- the recess (13) of the die (9) is charged with a first measured quantity of molding compound (15) so that the recess (13) is filled with a first layer,
- an element, e.g. an electronic module (3) for noncontacting data exchange, is placed on the first layer,
- the recess (13) of the die (9) is charged with a second measured quantity of molding compound (15) so that said element is located between two layers of the molding compound (15) and surrounded thereby on all sides.

3. A method for producing a data carrier according to claim 1, **characterized in that** an element located at least partly on the surface of the completed data carrier (1) is pressed into the molding compound (15) during pressing of the molding compound (15) with the pressure ram (11).

4. A method for producing a data carrier according to claim 3, **characterized in that** the part of the element to be located on the surface of the completed data carrier (1) is located on the end face (12) of the pressure ram (11) in form-fitting fashion and fixed in position there until the pressing operation is completed.

5. A method for producing a data carrier according to claim 3, **characterized in that** the element is inserted before pressing into the molding compound (15) located in the recess (13) and held in position by said compound.

6. A method for producing a data carrier according to claim 1, **characterized in that** the pressure ram (11) and/or the recess (13) in the die (9) has raised areas (29, 31) for forming, when the molding compound (15) is being pressed, recesses in the card body into which elements can later be embedded.

7. A method for producing a data carrier according to claim 1, **characterized in that**
- a layer (37) corresponding in size to the main surface of the card body to be produced is inserted in the recess (13) of the die (9),
- the recess (13) is charged with a measured quantity of molding compound (15),
- a further layer (33, 35) corresponding in size to the main surface of the card body to be produced is optionally placed on the molding compound (15).

8. A method for producing a data carrier according to claim 7, **characterized in that** at least one of the layers inserted in the recess (13) contains an additional element, for example an electronic module (3) or magnetic stripe (5).

9. A pressing apparatus for producing a data carrier (1) with a card body having two plane-parallel main surfaces and at least one element, for example an electronic module (3) or magnetic stripe, etc., disposed therein, consisting of a pressure ram (11) and a die (9), wherein
- the pressure ram (11) has an end face (12) which corresponds to the main surface of the card body to be produced,
- the die (9) has a recess (13) whose base surface corresponds to the main surface and whose depth at least to the thickness of the card body to be produced, and
- a device is provided for charging the recess (13) of the die (9) with a measured quantity of molding compound (15),
**characterized in that**
- the molding compound (15) with which the recess (13) of the die (9) is charged consists of plastic granular material or plastic powder, and
- a device is provided for heating the molding compound (15) located in the recess (13) of the die (9) to the point of flowability.

10. A pressing apparatus according to claim 9, **characterized in that** the end face (12) of the pressure ram (11) and/or the recess (13) of the die (9) has raised areas (29, 31).

11. A pressing apparatus according to claim 9, **characterized in that** the pressure ram (11) contains a suction air duct (27) for placing and fixing an element on its end face (12).

## Revendications

1. Procédé de fabrication d'un support de données (1) avec un corps de carte qui présente deux surfaces principales à plans parallèles et dans lequel est disposé au moins un élément, comme par exemple un module électronique (3) ou une bande magnétique (5), etc., comprenant les étapes de procédé suivantes :
- préparation d'un dispositif de pressage avec un tampon de pressage (11) dont la surface frontale (12) correspond à la surface principale du corps de carte et avec une matrice (9), qui présente un évidement (13) dont la surface de base correspond à la surface principale et la profondeur à au moins l'épaisseur du corps de carte,
- chargement de l'évidement (13) de la matrice (9) avec une quantité de matière moulable mesurée (15),
- abaissement du tampon de pressage (11) dans l'évidement (13) de la matrice (9) et pressage de la matière moulable (15) avec le tampon de pressage (11), jusqu'à ce que la matière moulable (15) prenne les dimensions souhaitées dans l'évidement (13), et
- retrait du tampon de pressage (11) et enlèvement du corps de carte du dispositif de pressage,
**caractérisé en ce que**
- la matière moulable (15), avec laquelle l'évidement (13) de la matrice (9) est chargé, est constituée de granulés de matière plastique ou de poudre de matière plastique et
- la matière moulable (15) est chauffée jusqu'à fluidité après le chargement de l'évidement (13) de la matrice (9).

2. Procédé de fabrication d'un support de données selon la revendication 1, **caractérisé en ce que**
- l'évidement (13) de la matrice (9) est chargé avec une première quantité de matière moulable mesurée (15), de sorte que l'évidement (13) soit rempli avec une première couche,
- un élément, par exemple un module électronique (3) pour l'échange de données sans contact, est posé sur la première couche,
- l'évidement (13) de la matrice (9) est chargé avec une deuxième quantité de matière moulable mesurée (15), de sorte que ledit élément soit entre deux couches de matière moulable (15) et soit entouré par cette dernière de tous les côtés.

3. Procédé de fabrication d'un support de données selon la revendication 1, **caractérisé en ce qu'**au cours du pressage de la matière moulable (15) avec le tampon de pressage (11), un élément, qui se trouve au moins partiellement à la surface du support de données (1) fini, est pressé dans la matière moulable (15).

4. Procédé de fabrication d'un support de données selon la revendication 3, **caractérisé en ce que** la partie de l'élément, qui doit se trouver à la surface du support de données (1) fini, se trouve dans sa forme finale sur la surface frontale (12) du tampon de pressage (11), et est fixé dans sa position à cet endroit jusqu'à ce que l'opération de pressage soit terminée.

5. Procédé de fabrication d'un support de données selon la revendication 3, **caractérisé en ce que** l'élément est introduit avant le pressage dans la matière moulable (15) se trouvant dans l'évidement (13), et est maintenu dans sa position par celle-ci.

6. Procédé de fabrication d'un support de données selon la revendication 1, **caractérisé en ce que** le tampon de pressage (11) et/ou l'évidement (13) dans la matrice (9) présentent des zones en relief (29, 31) au moyen desquelles dans le corps de carte au cours du pressage de la matière moulable (15) sont formés des évidements, dans lesquels des éléments peuvent être incorporés ultérieurement.

7. Procédé de fabrication d'un support de données selon la revendication 1, **caractérisé en ce que**
- une couche (37) est mise dans les évidements (13) de la matrice (9), couche qui pour sa taille correspond à la surface principale du corps de carte à fabriquer,
- l'évidement (13) est chargé avec une quantité mesurée d'une matière moulable (15),
- une couche supplémentaire (33, 35) est placée sur la matière moulable (15), couche qui pour sa taille correspond à la surface principale du corps de carte à fabriquer.

8. Procédé de fabrication d'un support de données selon la revendication 7, **caractérisé en ce qu'**au moins une des couches mises dans l'évidement (13) contient un autre élément, comme par exemple un module électronique (3) ou une bande magnétique (5).

9. Dispositif de pressage pour la fabrication d'un support de données (1) avec un corps de carte, qui présente deux surfaces principales à plans parallèles et dans lequel est disposé au moins un élément, comme par exemple un module électronique (3) ou une bande magnétique (5), etc., consistant en un tampon de pressage (11) et une matrice (9), dans lequel
- le tampon de pressage (11) présente une surface frontale (12), qui correspond à la surface principale du corps de carte à fabriquer,
- la matrice (9) présente un évidement (13), dont la surface de base correspond à la surface principale et la profondeur au moins à l'épaisseur du corps de carte à fabriquer, et
- un moyen est prévu pour le chargement de l'évidement (13) de la matrice (9) avec une quantité mesurée d'une matière moulable (15),
**caractérisé en ce que**
- la forme moulée (15), avec laquelle l'évidement (13) de la matrice (9) est chargée, est constituée de granulés de matière plastique ou de poudre de matière plastique et
- un moyen est prévu pour le chauffage jusqu'à fluidité de la matière moulable (15) se trouvant dans l'évidement (13) de la matrice (9).

10. Dispositif de pressage selon la revendication 9, **caractérisé en ce que** la surface frontale (12) du tampon de pressage (11) et/ou l'évidement (13) de la matrice (9) présentent des zones en relief (29, 31).

11. Dispositif de pressage selon la revendication 9, **caractérisé en ce que** le tampon de pressage (11) contient un canal d'aspiration d'air (27), à l'aide duquel un élément peut être placé et fixé sur sa surface frontale (12).
